# FASCICULE DE BREVET EUROPEEN

(11) **EP 3 126 069 B1**
(45) Date de publication et mention de la délivrance du brevet: **13.03.2019**
(21) Numéro de dépôt: 15713501.3
(22) Date de dépôt: 01.04.2015
(51) Int. Cl.: B09C 1/08, B09C 1/00, B09C 1/02, C02F 1/40, C02F 11/00, C02F 101/32

(54) **PROCÉDÉ DE TRAITEMENT DE SOLS ET/OU DE BOUES POLLUÉ(E)S PAR DES HYDROCARBURES**
VERFAHREN ZUR BEHANDLUNG VON DURCH KOHLENWASSERSTOFFE VERSCHMUTZTEN BÖDEN UND/ODER SCHLAMM
METHOD FOR TREATING SOILS AND/OR SLUDGE POLLUTED BY HYDROCARBONS

(30) Priorité: 04.04.2014 LU 92424
(43) Date de publication de la demande: 08.02.2017
(73) Titulaire: De Loës, Pierre, 1201 Geneve (CH)
(72) Inventeur: STENGEL, Patrice, F-06800 Cagnes-sur-Mer (FR)
(74) Mandataire: Office Freylinger
(86) Numéro de dépôt international: PCT/EP2015/057247
(87) Numéro de publication internationale: WO 2015/150485

(56) Documents cités:
- DE-U1- 20 311 607
- JP-A- H09 206 732
- US-A1- 2004 229 342

## Description

### Domaine technique

La présente invention concerne un procédé de traitement permettant la dépollution de sol et/ou de boue pollué(e) par les hydrocarbures.

### Etat de la technique

Les pollutions causées par les hydrocarbures provoquent des répercussions nocives et durables sur l'environnement marin mais également terrestre. Ces pollutions d'hydrocarbures peuvent être engendrées par des accidents de transport de pétrole ou des rejets volontaires en mer, des fuites de pipe-line, des plate-formes pétrolières de forage ainsi que tous les transports terrestres des hydrocarbures.

La pollution causée par les hydrocarbures est très difficile à traiter de par les propriétés physiques et chimiques des hydrocarbures. En effet, ces hydrocarbures présentent souvent une texture très visqueuse conduisant à leur engluement dans l'environnement ce qui rend leur retrait physique très difficile. La plupart de ces hydrocarbures ont une composition toxique nuisible aux écosystèmes. Cette toxicité peut même aboutir à la disparition d'organismes vivants essentiels pour l'équilibre et le maintien de l'écosystème.

La pollution des hydrocarbures peut concerner d'une part les milieux aquatiques (mer, océan, fleuve, etc...) et les milieux terrestres (sables, sols, boues etc...).

Pour traiter les pollutions des hydrocarbures dans les milieux aquatiques, la solution principalement employée était d'utiliser des solvants pour couler les nappes d'hydrocarbures formées à la surface de l'eau. Cependant, les solvants utilisés pouvaient s'avérer également très nocifs pour l'environnement et l'écosystème. Concernant les pollutions des milieux terrestres, le traitement de dépollution consistait essentiellement à évacuer les sols, sables et boues souillés par les hydrocarbures vers des centres de retraitement. Eventuellement, ces sols, sables et boues souillés par les hydrocarbures étaient simplement stockés dans des décharges prévues à cet effet.

D'autres solutions ont été proposées plus récemment, ces solutions mettant en oeuvre des solvants ou des absorbants.

Le document WO98/37991 décrit des procédés impliquant des agents chimiques oxydants pour réaliser une réaction d'oxydation radicalaire conduisant à l'oxydation des hydrocarbures. Toutefois, ce type de réaction d'oxydation implique des conditions de mise en oeuvre en milieu acide et à des températures élevées (de 70°C à 90°C) dans une série de réacteurs clos, la circulation des produits étant assurée par des pompes. En particulier, les hydroxyles radicalaires formés par le mécanisme chimique d'oxydation radicalaire sont évacués par des installations dédiées. Ces installations ne sont pas transportables et ne peuvent pas être mises en place aisément sur les sites pollués ou à proximité de ceux-ci, où se trouvent les sols pollués à traiter. Par ailleurs, compte tenu des conditions de mise en oeuvre et des installations requises, les coûts de traitement sont élevés. Enfin, concernant l'efficacité de traitement, il apparaît que les meilleurs résultats sont obtenus à une température de 85°C et ne permettent pas d'éliminer plus de 78,6% des hydrocarbures.

Les documents GB2010798 et EP07150751 décrivent des procédés dans lesquels on traite des boues d'effluents ou des sables contaminés par des germes infectieux à l'aide d'eau oxygénée à des fins bactéricides et/ou pour les désodoriser. Les boues d'effluents ou les sables qui en résultent sont donc désinfecté(e)s par l'action de l'eau oxygénée qui possède des propriétés bactéricides.

Enfin, le document WO01/74505A1 divulgue un procédé pour dépolluer des matériaux souillés par les hydrocarbures en utilisant de l'eau oxygénée. Les matériaux souillés par les hydrocarbures sont mélangés avec une solution aqueuse d'eau oxygénée. Il est alors observé la formation d'un moussage et/ou barbotage causé en fait par la dégradation de l'eau oxygénée par le mécanisme de dismutation produisant un dégagement d'oxygène. La libération d'oxygène lors de la dégradation de l'eau oxygénée permet alors d'obtenir la séparation physique des hydrocarbures et des matériaux. Les hydrocarbures détachés des matériaux sont alors récupérés par flottation.

Le document JPH09206732 (A) du 12 août 1997 décrit un procédé qui permet de purifier rapidement et efficacement les sols pollués et d'exécuter le traitement de purification sur place. On y propose de creuser des trous d'injection et puits d'aération arrivant dans une région polluée où le sol contient les polluants. Les agents de purification pour la décomposition des polluants, du peroxyde d'oxygène (comprenant optionnellement l'injection d'un stabilisant injecté dans le sol avant ou après le peroxyde d'hydrogène) et optionnellement des ions Fe²⁺ sont injectés dans le sol. Une partie des polluants réagit avec le peroxyde et la chaleur produite par la décomposition du peroxyde permet de vaporiser les polluants non décomposés. Les polluants vaporisés sont évacués du sol par les puits d'aération.

Il existe un besoin permanent de développer des procédés de dépollution de sol et/ou de boue souillé(e) par les hydrocarbures de plus en plus efficaces et surtout faciles à mettre en oeuvre.

### Objet de l'invention

Un objet de la présente invention est de fournir un procédé permettant la dépollution efficace de sol et/ou de boue souillé(e) (pollué(e)) par des hydrocarbures sans présenter les inconvénients des procédés existants. En particulier, un objet de la présente invention est de pouvoir traiter les hydrocarbures qui ont séjourné longtemps dans les sols et/ou les boues à traiter et qui ont alors durci avec le temps, formant alors des agglomérats parfois volumineux avec les particules de sol et /ou de boue.

Un objet de la présente invention est de fournir un procédé pouvant être mis en oeuvre directement sur le site pollué et donc sans nécessité le transport de sol et/ou de boue souillé(e) par les hydrocarbures dans un centre de retraitement.

Un autre objet de l'invention est de fournir un procédé de dépollution du sol et/ou de la boue pollué(e) par des hydrocarbures permettant en outre de récupérer les hydrocarbures dans le but d'une réutilisation.

Conformément à l'invention, cet objectif est atteint par un procédé selon la revendication 1.

### Description générale de l'invention

Afin de résoudre le problème mentionné ci-dessus, la présente invention propose un procédé de dépollution de sol et/ou de boue souillé(e) par des hydrocarbures caractérisé en ce qu'il comprend les étapes successives de :
- mélange dudit sol et/ou de ladite boue souillé(e) par des hydrocarbures avec une solution aqueuse comprenant un mélange de glycol et de glycérol de sorte à obtenir une mixture a'),
- ajout et mélange à la mixture a') d'une solution aqueuse comprenant du peroxyde d'hydrogène de façon à obtenir une mixture b')
- décantation de la mixture b') dans un bac de séparation-décantation comprenant de l'eau, de sorte que les hydrocarbures sont séparés par flottation dudit sol et/ou de ladite boue et que ledit sol/et ou ladite boue débarrassé(e) des hydrocarbures se précipite au fond du bac de décantation.

Le terme « sol » désigne un matériau plus ou moins friable constitué en majorité de terre et/ou de sable. Le terme « sol » se réfère à des matériaux essentiellement constitués de sable ; ou essentiellement constitué de terre ou constitués d'un mélange de sable et de terre dans toutes les proportions possibles.

Le terme « boue » se réfère à un mélange de terre et d'eau ou un mélange de sable et d'eau ou un mélange de terre, de sable et d'eau, dans toutes les proportions possibles (excepté uniquement de l'eau et excepté uniquement de la terre et/ou sable) et qui présente un aspect visqueux.

Le terme « hydrocarbure » désigne un ou des composé(s) organique(s) constitué(s) exclusivement d'atomes de carbone et d'hydrogène, de formule brute CnHm où n et m sont deux entiers naturels liquides ou solides à température ambiante. Les hydrocarbures peuvent être de n'importe quelle nature et de n'importe quelle origine. On peut par exemple mentionner les hydrocarbures lourds, les hydrocarbures aromatiques polycycliques et les hydrocarbures aliphatiques ainsi que n'importe quel de leur mélange. Ces hydrocarbures peuvent provenir par exemple de site de raffinage, de fuites de pipeline, des accidents maritimes de transport de pétrole, des accidents terrestres de transport de carburants, des stations services, des sites de transvasement de carburants (par exemple, chantiers du génie civil), de marée noire, etc...

Le terme « polyol(s) » décrit un mélange de glycol et de glycérol.

Le terme « solution aqueuse comprenant un ou des polyol(s) » se réfère à une composition comprenant de l'eau et un ou des polyol(s).

Le terme « solution pure de polyol(s) » désigne une solution comprenant une quantité de 100% de polyol(s) (à savoir sans eau).

Le terme « peroxyde d'hydrogène » se réfère au composé H₂O₂ aussi désigné par le terme eau oxygénée.

Le procédé selon l'invention se réfère à deux étapes successives.

Le procédé de dépollution comprend une première étape a) consistant en le mélange du sol et/ou de boue souillé(e) (ou pollué(e) ou contaminé(e)) par les hydrocarbures avec une solution aqueuse comprenant un ou plusieurs polyol(s). De façon surprenante, il a été mis en évidence, lors du développement de la présente invention que le mélange du sol et/ou de boue souillé(e) par les hydrocarbures avec une solution aqueuse de polyol(s) permet d'accroître significativement l'effet de la solution aqueuse comprenant du peroxyde d'hydrogène dans l'étape b) sur les hydrocarbures déjà décrit dans le document WO01/74505A1.

En effet, le mélange du sol et/ou de boue souillé(e) avec la solution aqueuse comprenant du peroxyde d'hydrogène produit un effet de moussage et/ou de barbotage. Cet effet de moussage et/ou de barbotage est lié à la dégradation du peroxyde d'hydrogène conformément au mécanisme de dismutation résultant alors en un dégagement d'oxygène. La réaction de dismutation est la suivante : H₂O₂→ H₂O + ½ O₂. Ce dégagement d'oxygène au sein du sol et/ou de boue souillé(e) entraîne le décrochage des hydrocarbures du sol et/ou de boue souillé(e). Il en résulte une séparation physique des hydrocarbures et des particules de sol et/ou de boue souillé(e).

Il a été mis en évidence par la présente invention que le mélange préalable du sol et/ou de boue souillé(e) avec une solution aqueuse d'un mélange de glycol et de glycérol permet d'améliorer significativement l'effet de moussage et/ou de barbotage causé par la solution aqueuse de peroxyde d'hydrogène. Cela aboutit donc à une séparation en profondeur des hydrocarbures et des particules de sol et/ou de boue souillé(e). Ainsi, les hydrocarbures peuvent facilement et efficacement être séparés des particules de sol et/ou de boue par flottation dans une solution aqueuse, en particulier l'eau. En effet, les hydrocarbures vont remonter à la surface tandis que les particules de sol et/ou de boue, débarrassées des hydrocarbures, vont se déposer dans le fond du récipient, par exemple un bac de séparation-décantation.

Le procédé selon l'invention présente l'avantage de pouvoir être très facilement mis en oeuvre. En effet, le procédé de dépollution ne requiert pas l'utilisation de solvant très nocif ou de conditions opératoires contraignantes telles qu'un milieu très acide et/ou des températures élevées. Au contraire, le procédé selon l'invention peut être mis en oeuvre à température ambiante. L'installation requise pour exécuter le procédé n'est donc pas soumise à de nombreuses contraintes techniques. En conséquence, le procédé selon l'invention peut être exécuté par un dispositif ou une installation transportable directement sur ou du moins à proximité du site de pollution. Ceci évite donc de devoir extraire et transporter les sols et/ou les boues à dépolluer vers des sites de retraitement spécifiques éloignés des sites pollués.

En outre, le présent procédé présente l'avantage d'éviter toute contamination de l'environnement du site de pollution avec des solvants nocifs pour l'environnement. En effet, le sol et/ou la boue à dépolluer est extrait(e) du site pollué. Les solutions aqueuses de polyol(s) et de peroxyde d'hydrogène ne sont pas déversées directement sur le site de pollution et n'affecteront donc pas l'écosystème du site de pollution. De surcroît, il faut souligner qu'une fois le sol et/ou la boue dépollué(e) par le procédé selon l'invention, ils ne contiennent plus de solution chimique détectable (ou éventuellement sous forme de traces) et peuvent donc être à nouveau déposé(e) sur leur site d'origine. Une fois le sol et/ou la boue réinstallé(e) sur le site d'origine, l'écosystème et en particulier les micro-organismes pourront à nouveau proliférer.

De plus, de façon surprenante, il a été observé que le procédé selon l'invention permettait de dépolluer un sol et/ ou une boue dans lequel (laquelle) les hydrocarbures sont présents depuis une longue période, par exemple plusieurs années. La présence des hydrocarbures dans le sol et/ou la boue pendant une longue période conduit au durcissement et à l'agglomération des hydrocarbures avec les particules de sol et/ou de boue. Dans certains cas, ces agglomérats sont volumineux et rendent le sol et/ou la boue difficile à traiter. Ce type de sol est généralement considéré comme réfractaire. De façon plus générale, le procédé de dépollution et en particulier l'utilisation séquentielle d'une solution aqueuse de polyol(s) et d'une solution aqueuse de peroxyde d'hydrogène permet de récupérer un sol et/ou une boue parfaitement dépollué(e).

Selon un mode de réalisation préféré, le procédé de dépollution selon l'invention est mis en oeuvre à température ambiante. Ceci permet en particulier de prévenir la libération de composés organo-volatiles (COV) dans l'atmosphère. Ainsi, les contraintes de sécurité pour les opérateurs du procédé sont quasiment nulles.

En outre, il a été observé que des résultats particulièrement satisfaisants étaient atteints lorsque le sol et/ou la boue à traiter par le procédé de dépollution présente une viscosité cinématique comprise entre 0.0003 et 0.0008 m²/s ( 300 et 800 Centistoke (Cst)) et de façon préférée située entre 0.0004 et 0.0006 m²/s (400 et 600 Cst). Selon un mode de réalisation, une étape préalable de broyage du sol et/ou de boue peut être effectuée avant l'étape a) du procédé. Cette étape de broyage peut par exemple être réalisée avec un concasseur. De façon préférée, le broyage est effectué de sorte à obtenir des particules de sol et/ou de boue souillé(e) par les hydrocarbures inférieures à 50mm. Cette étape de broyage est particulièrement utile dans le cas d'un sol réfractaire.

La solution aqueuse de polyol(s) comprend un mélange de glycérol (CH₂-CH(OH)-CH₂-OH) et de glycol (CH₃-CH(OH)-CH₂-OH). De préférence, pour obtenir la solution aqueuse de polyol(s) utile pour l'étape a) du procédé, on mélangera une solution pure de polyol(s) (à savoir une solution comprenant 100% de polyol(s)) avec de l'eau. En particulier, pour un volume de solution pure de polyol(s), on ajoutera au moins un volume d'eau de façon à obtenir la solution aqueuse de polyol(s). De façon préférée, la solution pure de polyol(s) (à savoir sans eau) comprend environ entre 40% et 60% en volume de glycol et entre 40% et 60% en volume de glycérol par rapport au volume total de la solution pure de polyol(s).

Selon un mode de réalisation de l'invention, la solution aqueuse de polyol(s) consiste en de l'eau et un mélange de glycol et de glycérol à l'exclusion de tout autre composé. En d'autres termes, dans ce cas, la somme des pourcentages des quantités d'eau et du mélange de glycol et de glycérol est égale à 100%.

Le mélange de l'étape a) est effectué de manière à obtenir une mixture a') comprenant le sol et/ou la boue souillé(e) par les hydrocarbures et la solution aqueuse comprenant le ou les polyol(s) qui est de préférence bien homogène. De façon préférée, la solution aqueuse comprenant le ou les polyol(s) est mélangée avec le sol et/ou la boue par injection, c'est à dire en injectant la solution aqueuse comprenant le ou les polyols dans le sol et/ou la boue à traiter.

Selon un mode de réalisation de l'invention, on mélange le sol et/ou la boue souillé(e) par les hydrocarbures avec la solution pure comprenant un ou les polyol(s), lors de l'étape a), dans un rapport volumique d'au moins 10 à 30 litres en volume de solution pure de polyol(s) par m³ de sol et/ou de boue souillé(e) par les hydrocarbures et de façon préférée d'environ 15 litres en volume de solution pure de polyol(s) par m³ de sol et/ou de boue souillé(e) par les hydrocarbures et en rajoutant simultanément au moins la même quantité d'eau, à savoir dans un rapport volumique d'au moins 10 à 30 litres en volume d'eau par m³ de sol et/ou de boue souillé(e) par les hydrocarbures et de façon préférée d'environ 15 litres en volume d'eau par m³ de sol et/ou de boue souillé(e) par les hydrocarbures.

Au total, le sol et/ou la boue souillé(e) par les hydrocarbures peut être de préférence traité(e) avec une solution aqueuse de polyol(s) (à savoir comprenant la solution pure de polyol(s) et de l'eau) dans un rapport volumique d'au moins 20 à 60 litres de solution aqueuse de polyol(s) en volume par m³ de sol et/ou de boue souillé(e) et de préférence environ 30 litres de solution aqueuse de polyol(s) par m³ de sol et/ou de boue souillé(e) par les hydrocarbures.

En particulier, la concentration de solution aqueuse de polyol(s) dans la mixture a') est de 0,1% à 10% et de préférence de 1 à 3% et de façon encore plus préférée de 1,5% à 2% en volume de solution aqueuse de polyol(s) par m³ de mixture a').

L'action du ou des polyol(s) sur les hydrocarbures va permettre de préparer efficacement les hydrocarbures à l'action de moussage et/ou de barbotage provoquée par la solution aqueuse de peroxyde d'hydrogène. L'ajout préalable de la solution aqueuse comprenant le ou les polyol(s) potentialise l'effet de décrochage sur les hydrocarbures de la solution aqueuse de peroxyde d'hydrogène. Il n'est pas nécessaire de retirer (d'extraire) la solution aqueuse comprenant le ou les polyol(s) avant l'ajout de la solution aqueuse de peroxyde d'hydrogène.

La mixture a') est ensuite mélangée avec la solution aqueuse de peroxyde d'hydrogène lors de l'étape b). Ce nouveau mélange peut s'effectuer immédiatement après l'étape a) ou après une certaine durée, par exemple de l'ordre de quelques minutes, environ 10mn. De façon préférée, un volume d'eau correspondant à au moins la moitié du volume de solution aqueuse de peroxyde d'hydrogène est ajoutée simultanément. Il est alors obtenu une mixture b') comprenant le sol et/ou la boue souillé(e) par les hydrocarbures, la solution aqueuse de polyol(s) ainsi que la solution aqueuse de peroxyde d'hydrogène. Avantageusement, l'étape de mélange b) est réalisée de façon à obtenir une mixture b') homogène.

De préférence, la solution aqueuse de peroxyde d'hydrogène présente une concentration comprise entre environ 30% et 40% en volume de peroxyde d'hydrogène et de façon préférée environ 35% en volume de peroxyde d'hydrogène par rapport au volume total de la solution aqueuse comprenant le peroxyde d'hydrogène. Selon un mode de réalisation particulier, la solution aqueuse de peroxyde d'hydrogène consiste en de l'eau et du peroxyde d'hydrogène à l'exclusion de tout autre composé. En d'autres termes, dans ce cas, la somme des pourcentages des quantités d'eau et de peroxyde d'hydrogène est égale à 100%.

De plus, selon un mode réalisation, lors de l'étape b), la mixture a') est mélangée avec la solution aqueuse de peroxyde d'hydrogène dans un rapport volumique de 20 à 30 litres en volume par m³ de la mixture a') et de façon préférée d'environ 25 litres en volume de solution aqueuse de peroxyde d'hydrogène par m³ de la mixture a').

A l'issue de l'étape b), sous l'effet de l'activité de la solution aqueuse comprenant du peroxyde d'hydrogène, en particulier de la libération d'oxygène lors du moussage et/ou barbotage, les hydrocarbures sont décrochés des particules de sol et/ou de boue et peuvent être facilement séparés par flottation. En effet, les hydrocarbures auront tendance à remonter à la surface tandis que les particules de sol et/ou de boue précipiteront au fond du récipient.

Une étape supplémentaire peut être mise en oeuvre après l'étape b) pour améliorer la séparation par flottation des hydrocarbures. Il s'agit en fait d'une étape de décantation de la mixture b') dans un bac de séparation-décantation contenant de l'eau. De préférence, à l'étape c), la mixture b') est déversée dans le bac de séparation-décantation contenant de l'eau. La mixture b') est de préférence mélangée avec de l'eau dans un rapport volumique d'au moins 50% et de préférence d'au moins 80% et de façon préférée d'au moins 100% en volume d'eau par rapport au volume de la mixture b'). Dans ce bac de séparation-décantation rempli d'eau, les hydrocarbures vont remonter à la surface de l'eau et être séparés par flottation alors que les particules de sol et/ou de boue vont précipiter au fond du bac de séparation-décantation.

Avantageusement, la durée de l'étape c) est comprise entre 10 et 30 minutes et de façon préférée est d'environ 10 minutes. Ainsi les hydrocarbures formant une couche en surface (le surnageant) peuvent être facilement récupérés par raclage. En outre, les hydrocarbures récupérés par raclage peuvent être soumis à une étape de séparation additionnelle dans un décanteur triphasique ou 3 voies. Cette étape de séparation additionnelle permet de séparer l'eau ainsi que les particules résiduelles de sol et/ou de boue des hydrocarbures. Trois phases distinctes sont obtenues : l'une étant la phase aqueuse, une autre phase comprenant les hydrocarbures et une dernière phase comprenant les particules résiduelles de sol et/ou de boue.

Les hydrocarbures séparés et récupérés à l'issue du procédé de dépollution comprennent moins de 3% d'eau en volume par rapport au volume total d'hydrocarbures. Les hydrocarbures ne comprennent pas de solution aqueuse de polyol(s) et/ou de solution aqueuse de peroxyde d'hydrogène détectable (ou éventuellement seulement sous forme de traces). Ces hydrocarbures peuvent alors être recyclés en raffinerie sans aucun problème.

Concernant le sol et/ou la boue obtenu(e) à la fin du traitement à savoir débarrassé(e) des hydrocarbures, le procédé selon l'invention permet d'obtenir un sol et/ou une boue comprenant une quantité inférieure de 190 ppm d'hydrocarbures en poids. Ces excellents résultats sont notamment dus à l'utilisation séquentielle d'une solution aqueuse de polyol(s) et d'une solution aqueuse de peroxyde d'hydrogène. En effet, la mise en oeuvre d'un procédé de dépollution ne comportant qu'une étape de traitement avec une solution de peroxyde d'hydrogène ne permet d'atteindre qu'un niveau de quantité d'hydrocarbures inférieure à 500ppm en poids d'hydrocarbures.

En plus d'être débarrassé(e) des hydrocarbures, le sol et/ou la boue obtenu(e) à l'issue du procédé de dépollution selon l'invention ne contient pas (ou éventuellement seulement des traces) de solution aqueuse de polyol(s) détectable et/ou de solution aqueuse de peroxyde d'hydrogène détectable. Ainsi, le sol et/ou la boue peut être facilement réimplanté(e) sur son lieu d'origine sans risquer d'altérer l'écosystème. En outre, la solution aqueuse de peroxyde d'hydrogène présente des effets bactéricides ce qui permet de réduire la quantité de germes infectieux éventuellement présents dans le sol et/ou la boue à traiter.

L'eau utilisée dans le procédé de dépollution pourra être réutilisée en circuit fermé dans le procédé de dépollution ou être évacuée si la quantité de polyol(s) et/ou de peroxyde d'hydrogène contenue est compatible avec son rejet dans l'environnement (au vu de la Demande Chimique en Oxygène mesurée) ou éventuellement dans certains cas devra au préalable être régulée (contrôle du pH) ou filtrée avant son rejet dans l'environnement.

Un aspect supplémentaire de l'invention est l'utilisation séquentielle d'une solution aqueuse comprenant un ou des polyol(s) et d'une solution aqueuse de peroxyde d'hydrogène pour dépolluer un sol et/ou une boue souillé(e) (polluée) par des hydrocarbures. Cela signifie que le sol et/ou la boue souillé(e) par les hydrocarbures est d'abord mis(e) en contact avec la solution aqueuse comprenant un ou des polyol(s) puis avec la solution aqueuse comprenant du peroxyde d'hydrogène. En outre, il n'est pas nécessaire de retirer la solution aqueuse comprenant un ou des polyol(s) du sol et/ou de boue avant d'ajouter la solution aqueuse de peroxyde d'hydrogène.

Le procédé de dépollution selon l'invention présente l'avantage de pouvoir être mis en oeuvre à proximité du site de pollution. Ceci est possible par l'utilisation d'une installation transportable pour exécuter le procédé selon l'invention.

De préférence, l'installation transportable pour mettre en oeuvre le procédé de dépollution comprend d'amont en aval:
- un mélangeur comprenant une enceinte fermée et des moyens pour mélanger,
- un bac de stockage de la solution pure de polyol(s) (sans eau), et
- un bac de stockage de la solution aqueuse comprenant du peroxyde d'hydrogène.

Avantageusement, l'installation transportable comprend en outre un bac de séparation-décantation comprenant une cuve à ciel ouvert et des moyens pour mélanger, installé en aval, à savoir à la suite du mélangeur.

En particulier, le mélangeur utilisé peut être en acier inoxydable. Ce mélangeur peut comprendre en tant que moyens pour mélanger des socs à charrue. Si nécessaire et dans le but d'augmenter la cadence du procédé, plusieurs mélangeurs peuvent être installés en ligne sur l'installation. Le mélangeur est équipé d'un orifice de chargement et d'une trappe de déchargement avec optionnellement une mise sous pression atmosphérique par un évent. Pour acheminer le sol et/ou la boue à dépolluer à l'intérieur du mélangeur, un moyen d'acheminement tel que par exemple une vis de chargement ou de déchargement sans fin ou une vis d'Archimède pourra être utilisée. De préférence, le moyen d'acheminement sera équipé d'un dégrilloir (ou dégrilleur) ou tamis permettant de retenir par exemple les agglomérats volumineux de particules de sol et/ou de boue et d'hydrocarbures (en cas de sol réfractaire), les pierres, les morceaux de bois ou tout autre objet métallique ou plastique tout en laissant passer les particules de sol et/ou de boue.

Avantageusement, les deux bacs de stockage de réactifs respectivement celui comprenant la solution pure de polyol(s) et celui comprenant la solution aqueuse de peroxyde d'hydrogène sont chacun pourvus d'une pompe de dosage automatique réglable. Ces deux bacs de stockage de réactifs alimentent directement le mélangeur via leurs pompes de dosage automatiques.

En outre, le mélangeur doit de préférence être connecté à une alimentation en eau potable ou industrielle.

Pour acheminer la mixture b') comprenant le sol et/ou la boue souillé(e) par les hydrocarbures, la solution aqueuse de polyol(s) et la solution aqueuse de peroxyde d'hydrogène, un moyen d'acheminement tel que par exemple une vis de chargement ou de déchargement sans fin étanche ou une vis d'Archimède pourra être utilisée.

La mixture b') est alors transférée dans un bac de séparation-décantation. Ce bac de séparation-décantation comprend de préférence une cuve à ciel ouvert (c'est à dire dépourvue de cloison supérieure) ainsi que des moyens de mélange tels que par exemple un rotor à socs à charrue. Le bac de séparation-décantation est en outre rempli d'eau de préférence d'au moins la moitié de sa capacité volumique, de façon préférée d'au moins 75% de sa capacité volumique et de façon encore plus préférée d'au moins 80% de sa capacité volumique.

Selon un mode de réalisation de l'invention, le bac de séparation-décantation comprend une installation de raclage de surface (par exemple un racleur) permettant de récupérer les hydrocarbures remontés à la surface et donc séparés du sol et/ou de boue par flottation. Ceci intervient à la suite de la réaction de moussage et/ou barbotage causée par la solution aqueuse de peroxyde d'hydrogène et en particulier due à la réaction de dismutation. Le sol et/ou la boue dépollué(e) précipite au fond du bac de séparation-décantation. Pour extraire le sol/et ou la boue dépollué(e) au fond du bac séparation-décantation, des moyens d'acheminement tels que par exemple une vis d'Archimède ou une vis de chargement ou de déchargement sans fin étanche peuvent être utilisés. Le sol et/ou la boue dépollué(e) peut ensuite être éventuellement acheminé(e) vers un bac de stockage du sol et/ou de boue dépollué(e).

L'installation transportable peut optionnellement comprendre un concasseur en amont, c'est à dire avant le mélangeur. Ce concasseur est utile pour broyer le sol et/ou la boue avant de l'incorporer dans le mélangeur de sorte à obtenir des particules de sol et/ou de boue de préférence de taille inférieure à 50mm. Cela peut être utile par exemple en cas de sol et/ou de boue réfractaire

Avantageusement, l'installation transportable peut également comprendre en aval c'est à dire à la suite du bac de séparation-décantation, un décanteur triphasique (ou à 3 voies). Les hydrocarbures récupérés dans le surnageant du bac de séparation-décantation peuvent être traités par ce décanteur triphasique. Ce décanteur triphasique sera notamment utile pour séparer les éventuelles particules résiduelles de sol et/ou de boue et la solution aqueuse des hydrocarbures récupérés par raclage dans le bac de séparation-décantation. Le décanteur triphasique permet de séparer les trois phases distinctes à savoir, les hydrocarbures, la phase aqueuse et les particules résiduelles de sol et/ou de boue provenant du surnageant issu du bac de séparation-décantation. L'utilisation d'un décanteur triphasique permet d'obtenir des hydrocarbures presque complètement débarrassés de particules résiduelles de sol et/ou de boue et de phase aqueuse.

Tous les modes de réalisation précédemment décrits peuvent être combinés sous réserve de leur faisabilité technique.

### Brève description des dessins

D'autres particularités et caractéristiques de l'invention ressortiront de la description détaillée de quelques modes de réalisation avantageux présentés ci-dessous, à titre d'illustration, en se référant au dessin annexé. Celui-ci montre:

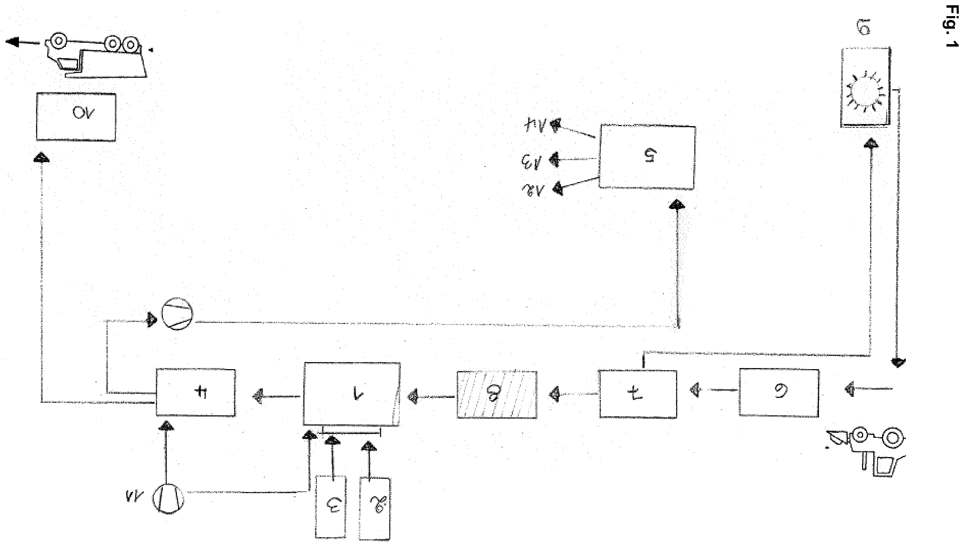

Fig. 1: est un schéma d'un mode de réalisation d'une installation transportable utile pour mettre en oeuvre le procédé selon l'invention.

### Description d'une exécution préférée

La Figure 1 décrit un mode de réalisation du procédé selon l'invention et également de l'installation transportable utile pour mettre en oeuvre le procédé de dépollution.

La Figure 1 décrit en particulier une installation transportable comprenant d'amont en aval:
- un mélangeur (1) comprenant une enceinte fermée et des moyens pour mélanger ainsi que des moyens pour mettre en oeuvre le procédé,
- un bac de stockage de la solution pure de polyol(s) (2),
- un bac de stockage de la solution aqueuse comprenant le peroxyde d'hydrogène (3),
- un bac de séparation-décantation (4) comprenant une cuve ouverte des moyens pour mélanger et un racleur d'hydrocarbures de surface et
- un décanteur triphasique (5).

Le sol et/ou la boue souillé(e) par des hydrocarbures sont acheminés jusqu'au mélangeur (1). En particulier, le sol et/ou la boue sont acheminé(e) via un trémie de chargement (6). Le sol et/ou la boue souillé(e) passe ensuite par un dégrilloir (7) qui permettra de séparer par exemple les agglomérats volumineux de particules de sol et/ou de boue, les pierres, les morceaux de bois ou tout autre objet métallique ou plastique tout en laissant passer les particules de sol et/ou de boue. Eventuellement, les matériaux retenus pas le dégrilloir (7) pourront être broyés par le concasseur (9) avant d'être réacheminés sur le trémie de chargement (6) en particulier dans le cas d'un sol réfractaire.

Le sol et/ou la boue sont ensuite chargé(e) dans le mélangeur (1) via une vis de chargement sans fin (8). Le mélangeur (1) comprend une enceinte fermée pour éviter tout risque de projection lors du mélange. De préférence, le mélangeur est en acier inoxydable. L'enceinte est mise sous pression atmosphérique par un évent. Par exemple, le mélangeur (1) peut présenter une contenance de 10m³ mais en charge réelle seulement de 8m³.

Dans ledit mélangeur (1), le sol et/ou la boue est mélangé(e) en premier lieu avec une solution aqueuse d'un mélange de glycol et de glycérol résultant du mélange des réactifs contenus dans le bac de stockage de la solution pure de polyol(s) (2) avec de l'eau provenant de l'alimentation en eau (11). En particulier, on peut déverser jusqu'à 15 litres/m3 de solution pure de polyol(s) avec une même quantité d'eau dans le mélangeur (1). Ce mélange est effectué de façon homogène par les moyens pour mélanger du mélangeur (1) qui sont de préférence des socs à charrue. On obtient alors une mixture a') comprenant le sol et/ou la boue souillé(e) par les hydrocarbures et la solution aqueuse de polyol(s).

Puis, la mixture a') est ensuite mélangée avec une solution aqueuse de peroxyde d'hydrogène provenant du mélange de réactifs contenus dans le bac de stockage de la solution aqueuse de peroxyde d'hydrogène (3) et de l'eau approvisionnée par l'alimentation en eau (11). De préférence, la concentration de peroxyde d'hydrogène est d'environ 35% en volume par rapport au volume total de la solution aqueuse de peroxyde d'hydrogène. Une fois encore, le mélange est effectué énergiquement de sorte que la mixture b') obtenue est homogène.

La mixture b') comprenant le sol et/ou la boue souillé(e) en hydrocarbures, la solution aqueuse d'un mélange de glycol et de glycérol et la solution aqueuse de peroxyde d'hydrogène est ensuite acheminée vers le bac de séparation-décantation (4). Le bac de séparation-décantation présente de préférence une contenance de 10m³ et est rempli d'eau au 8/10^{ème}. L'alimentation d'eau (11) permet également d'approvisionner le bac de séparation-décantation (4). Dans le bac de séparation-décantation (4), les hydrocarbures vont être séparés par flottation et remontés à la surface tandis que le sol et/ou la boue dépollué(e) va (vont) précipiter au fond dudit bac de séparation-décantation (4). Le bac de séparation-décantation (4) est de préférence équipé d'une installation de raclage de surface (racleur) avec une évacuation commandée pour récupérer les hydrocarbures en flottation. Le temps de séjour des hydrocarbures dans le bac de séparation-décantation (4) est par exemple d'environ 15 minutes. Le temps de séjour du sol et/ou de la boue est en fonction de la quantité accumulée au fond du bac de séparation-décantation (4) avant son évacuation. Le bac de séparation-décantation (4) est aussi équipé d'une vis d'Archimède pour extraire le sol et/ou la boue dépollué(e) et déposé(e) au fond du bac de séparation-décantation (4).

Le sol et/ou la boue dépollué(e) est acheminé(e) via la vis d'Archimède vers un bac de récupération de sol et/ou boue dépollué(e) (10). Le sol et/ou la boue dépollué(e) pourra être stockée dans le bac de stockage de sol et/ou boue dépollué(e) (10) jusqu'à son transport vers un site, par exemple son site d'origine. Le sol et/ou la boue dépollué(e) comprend moins de 190ppm d'hydrocarbures. A l'issue de ce procédé de dépollution, le sol et/ou la boue peut être réintroduit dans leur environnement d'origine sans risque pour l'écosystème.

Les hydrocarbures provenant du surnageant récupéré à la surface du bac de séparation-décantation (4) par raclage à l'issue de l'étape de décantation sont, quant à eux, acheminés vers un décanteur triphasique (5). Ainsi, sous l'action de ce décanteur triphasique (5), les particules résiduelles de sol et/ou de boue et l'eau seront séparées des hydrocarbures. On récupérera alors trois phases distinctes et séparées : la phase aqueuse (12), la phase comprenant les particules résiduelles de sol et/ou de boue (13) et les hydrocarbures isolés (14). Les hydrocarbures isolés (14) peuvent être recyclés pour être utilisés dans les usines de raffinage.

### Exemples :

Des tests expérimentaux ont été réalisés pour démontrer l'efficacité du procédé de dépollution selon l'invention qui combine l'utilisation séquentielle (successive ou consécutive) d'une solution aqueuse de polyol(s) et d'une solution aqueuse de peroxyde d'hydrogène.

### Exemple 1 :

Il s'agit d'un exemple comparatif car seule une solution aqueuse de peroxyde d'hydrogène est utilisée pour dépolluer une fraction de sol polluée aux hydrocarbures. En particulier, 1000 grammes de sol pollué par des hydrocarbures lourds à 12000 ppm (partie par millions) ont été mélangés avec un mélange comprenant 15 cl de peroxyde d'hydrogène et 0,5 litre d'eau. La mixture obtenue a été mélangée énergiquement. Puis les différentes phases de cette mixture ont été séparées par décantation. Les hydrocarbures sont séparés par flottation et remontent à la surface de la mixture. En revanche, les particules de sol vont précipiter au fond du récipient. En fin de traitement et une fois les hydrocarbures isolés, il a été mesuré que le sol dépollué comprenait une quantité d'hydrocarbures en poids inférieure à 500 ppm.

### Exemple 2 :

Comme dans l'exemple 1, 1000 grammes du même sol pollué par des hydrocarbures lourds à 12000 ppm ont d'abord été mélangés avec une solution comprenant 15 cl d'un mélange de glycol et de glycérol et un litre d'eau. Le mélange a été réalisé de façon énergique. La mixture a') obtenue comprenant le sol pollué avec les hydrocarbures et la solution aqueuse de glycol et de glycérol est ensuite mélangée à une solution aqueuse comprenant 15 cl de peroxyde d'hydrogène et 0,5 litre d'eau. Le mélange a été effectué énergiquement. La mixture b') comprenant le sol pollué aux hydrocarbures, la solution aqueuse de glycol et glycérol ainsi que la solution aqueuse de peroxyde d'hydrogène est alors obtenue. Les différentes phases de cette mixture b') sont alors séparées par décantation. Les hydrocarbures sont séparés par flottation et remontent à la surface de la mixture. En revanche, les particules de sol vont précipiter au fond du récipient. En fin de traitement et une fois les hydrocarbures isolés, il a été mesuré que le sol dépollué comprenait une quantité d'hydrocarbures en poids inférieure à 190 ppm.

En conclusion, les résultats expérimentaux obtenus démontrent que l'utilisation d'une solution aqueuse comprenant un mélange de glycol et de glycérol permet d'augmenter significativement l'efficacité de la solution aqueuse de peroxyde d'hydrogène en ce qui concerne le décrochage des hydrocarbures des particules de sol et/ou de boue. En effet, la quantité résiduelle d'hydrocarbures mesurée dans le sol à la fin du procédé de dépollution pour l'exemple 2 est largement inférieure à celle mesurée pour l'exemple 1 (solution aqueuse de peroxyde d'hydrogène uniquement) :
- quantité d'hydrocarbures inférieure à 500ppm pour l'exemple 1,
- quantité d'hydrocarbures inférieure à 190ppm pour l'exemple 2.

L'utilisation séquentielle d'une solution aqueuse d'un mélange de glycol et de glycérol et d'une solution aqueuse de peroxyde d'hydrogène permet d'améliorer significativement la séparation des hydrocarbures et des particules de sol et/ou de boue.

### Légende:

- 1: mélangeur
- 2: bac de stockage de la solution pure comprenant un ou des polyol(s)
- 3: bac de stockage de la solution aqueuse comprenant le peroxyde d'hydrogène
- 4: bac de séparation-décantation
- 5: décanteur triphasique
- 6: trémie de chargement
- 7: dégrilloir
- 8: vis de chargement sans fin
- 9: concasseur
- 10: bac de stockage de sol et/ou de boue dépollué(e)
- 11: alimentation en eau
- 12: phase aqueuse
- 13: phase comprenant les particules résiduelles de sol et/ou de boue
- 14: phase comprenant les hydrocarbures isolés

## Revendications

1. Procédé de dépollution de sol et/ou de boue souillé(e) par des hydrocarbures **caractérisé en ce qu'**il comprend les étapes successives de :
- a) mélange dudit sol et/ou de ladite boue souillé(e) par des hydrocarbures avec une solution aqueuse comprenant un mélange de glycol et de glycérol de sorte à obtenir une mixture a'),
- b) ajout et mélange à la mixture a') d'une solution aqueuse comprenant du peroxyde d'hydrogène de façon à obtenir une mixture b'), et
- c) décantation de la mixture b') dans un bac de séparation-décantation comprenant de l'eau, de sorte que les hydrocarbures sont séparés par flottation dudit sol et/ou de boue et que ledit sol/et ou ladite boue débarrassé(e) des hydrocarbures précipite au fond du bac de décantation.

2. Procédé de dépollution de sol et/ou boue selon l'une quelconque des revendications précédentes, **caractérisé en ce que** la concentration de peroxyde d'hydrogène dans la solution aqueuse comprenant du peroxyde d'hydrogène est comprise de 30% à 40% en volume par rapport au volume total de la solution aqueuse de peroxyde d'hydrogène.

3. Procédé de dépollution de sol et/ou de boue selon l'une quelconque des revendications précédentes, **caractérisé en ce qu'**à l'étape a), on mélange ledit sol et/ou de boue souillé(e) par des hydrocarbures avec la solution aqueuse comprenant un mélange de glycol et de glycérol dans un rapport volumique d'au moins 20 à 60 litres en volume par m³ de sol et/ou de boue souillé(e) par les hydrocarbures.

4. Procédé de dépollution de sol et/ou de boue selon l'une quelconque des revendications précédentes, **caractérisé en ce qu'**à l'étape b) la mixture a') est mélangée avec une solution aqueuse de peroxyde d'hydrogène dans un rapport volumique de 20 à 30 litres de solution aqueuse de peroxyde d'hydrogène /m³ de la mixture a').

5. Procédé de dépollution de sol et/ou de boue selon l'une quelconque des revendications précédentes, **caractérisé en ce qu'**à l'étape c) la mixture b') est mélangée avec de l'eau dans un rapport volumique d'au moins 50% en volume d'eau par rapport au volume de la mixture b').

6. Procédé de dépollution de sol et/ou de boue selon l'une quelconque des revendications précédentes, **caractérisé en ce que** le sol et/ou la boue à traiter présente une viscosité cinématique comprise entre 0.0003 et 0.0008 m²/s (300 et 800 Cst).

7. Procédé de dépollution de sol et/ou de boue selon l'une quelconque des revendications précédentes, **caractérisé en ce que** le procédé est mis en oeuvre à température ambiante.

8. Procédé de dépollution de sol et/ou de boue selon l'une quelconque des revendications précédentes, **caractérisé en ce que** les hydrocarbures sont sélectionnés parmi le groupe constitué par les hydrocarbures lourds, les hydrocarbures aliphatiques, les hydrocarbures aromatiques polycycliques et n'importe laquelle de leur combinaison.

9. Procédé de dépollution de sol et/ou de boue selon l'une quelconque des revendications précédentes, **caractérisé en ce qu'**il est mis en oeuvre par une installation transportable.

10. Procédé de dépollution de sol et/ou de boue selon la revendication 11 **caractérisé en ce que** l'installation transportable comprend d'amont en aval:
- un mélangeur 1 comprenant une enceinte fermée et des moyens pour mélanger,
- un bac de stockage d'une solution comprenant un ou des polyol(s) 2, et
- un bac de stockage d'une solution aqueuse comprenant du peroxyde d'hydrogène 3.

11. Procédé de dépollution de sol et/ou de boue selon la revendication 9 ou 10, **caractérisé en ce que** l'installation transportable comprend en aval :
- un bac de séparation-décantation 4 comprenant une cuve à ciel ouvert, des moyens pour mélanger et un racleur d'hydrocarbures de surface.

12. Procédé de dépollution de sol et/ou de boue selon l'une des revendications 9 à 11, **caractérisé en ce que** l'installation transportable comprend en outre un décanteur triphasique 5 installé à la suite du bac de séparation-décantation 4.

13. Procédé de dépollution de sol et/ou de boue selon l'une des revendications 9-12, **caractérisé en ce que** l'installation transportable comprend en outre en amont un concasseur 9.

14. Procédé de dépollution de sol et/ou de boue selon l'une des revendications 9 à 13, **caractérisé en ce que** l'installation transportable comprend un moyen d'acheminement comprenant une vis d'Archimède ou une vis de chargement ou de déchargement sans fin pour acheminer le sol et/ou la boue souillé(e) dans le mélangeur 1 et/ou un moyen d'acheminement comprenant une vis d'Archimède ou une vis de chargement ou de déchargement sans fin pour acheminer le sol et/ou la boue dépollué(e) précipité(e) au fond du bac de séparation-décantation 4 vers un bac de stockage du sol et/ou de boue dépollué(e) 10.

15. Utilisation séquentielle d'une solution aqueuse comprenant un mélange de glycol et de glycérol et d'une solution aqueuse comprenant du peroxyde d'hydrogène pour dépolluer un sol et/ou une boue souillé(e) par des hydrocarbures.

## Patentansprüche

1. Verfahren zur Dekontaminierung von Böden und/oder Schlämmen, die mit Kohlenwasserstoffen verunreinigt sind, **dadurch gekennzeichnet, dass** es nacheinander die folgenden Schritte umfasst:
- a) Vermischen des Bodens und/oder des Schlamm, der mit Kohlenwasserstoffen verunreinigt ist, mit einer wässrigen Lösung, die eine Mischung aus Glykol und aus Glycerin umfasst, sodass ein Gemisch a') erhalten wird,
- b) Zusetzen einer wässrigen Lösung, die Wasserstoffperoxid umfasst, zu dem Gemisch a)' und Vermischen mit diesem, sodass ein Gemisch b') erhalten wird, und
- c) Abgießen des Gemisches b') in einen Abscheide-/Absetz-Behälter, der Wasser umfasst, sodass sich die Kohlenwasserstoffe durch Aufschwimmen von dem Boden und/oder dem Schlamm abscheiden und sich der Boden und/oder Schlamm, welcher von den Kohlenwasserstoffen befreit ist, am Grund des Absetzbehälters niederschlägt.

2. Verfahren zum Dekontaminieren von Böden und/oder Schlämmen nach einem beliebigen der vorhergehenden Ansprüche, **dadurch gekennzeichnet, dass** die Konzentration an Wasserstoffperoxid in der wässrigen Lösung, die Wasserstoffperoxid umfasst, im Bereich von 30 % bis 40 % nach Volumen liegt, bezogen auf das Gesamtvolumen der wässrigen Lösung, die Wasserstoffperoxid umfasst.

3. Verfahren zum Dekontaminieren von Böden und/oder Schlämmen nach einem beliebigen der vorhergehenden Ansprüche, **dadurch gekennzeichnet, dass** in Schritt a) der Boden und/oder Schlamm, welcher mit Kohlenwasserstoffen verunreinigt ist, mit der wässrigen Lösung, welche eine Mischung aus Glykol und aus Glycerin umfasst, in einem Volumenverhältnis vermischt wird, das mindestens 20 bis 60 Liter nach Volumen pro m³ an Boden und/oder Schlamm, der mit Kohlenwasserstoffen verunreinigt ist, beträgt.

4. Verfahren zum Dekontaminieren von Böden und/oder Schlämmen nach einem beliebigen der vorhergehenden Ansprüche, **dadurch gekennzeichnet, dass** in Schritt b) das Gemisch a') mit einer wässrigen Lösung von Wasserstoffperoxid in einem Volumenverhältnis vermischt wird, das 20 bis 30 Liter an wässriger Lösung von Wasserstoffperoxid / m³ des Gemisches a') beträgt.

5. Verfahren zum Dekontaminieren von Böden und/oder Schlämmen nach einem beliebigen der vorhergehenden Ansprüche, **dadurch gekennzeichnet, dass** in Schritt c) das Gemisch b') mit Wasser in einem Volumenverhältnis vermischt wird, das mindestens 50 Volumen-% an Wasser beträgt, bezogen auf das Volumen des Gemisches b').

6. Verfahren zum Dekontaminieren von Böden und/oder Schlämmen nach einem beliebigen der vorhergehenden Ansprüche, **dadurch gekennzeichnet, dass** der zu behandelnde Boden und/oder Schlamm eine kinematische Viskosität im Bereich von 0,0003 bis 0,0008 m²/s (300 bis 800 Cst) aufweist.

7. Verfahren zum Dekontaminieren von Böden und/oder Schlämmen nach einem beliebigen der vorhergehenden Ansprüche, **dadurch gekennzeichnet, dass** das Verfahren bei Umgebungstemperatur durchgeführt wird.

8. Verfahren zum Dekontaminieren von Böden und/oder Schlämmen nach einem beliebigen der vorhergehenden Ansprüche, **dadurch gekennzeichnet, dass** die Kohlenwasserstoffen aus der Gruppe ausgewählt sind, welche aus den schwerflüchtigen Kohlenwasserstoffen, den aliphatischen Kohlenwasserstoffen, den polyzyklischen aromatischen Kohlenwasserstoffen und beliebigen Kombinationen davon besteht.

9. Verfahren zum Dekontaminieren von Böden und/oder Schlämmen nach einem beliebigen der vorhergehenden Ansprüche, **dadurch gekennzeichnet, dass** es mittels einer transportfähigen Anlage durchgeführt wird.

10. Verfahren zum Dekontaminieren von Böden und/oder Schlämmen nach Anspruch 9, **dadurch gekennzeichnet, dass** die transportfähige Anlage gemäß der Ablaufrichtung des Verfahrens Folgendes umfasst:
- eine Mischvorrichtung 1, die einen geschlossenen Hohlraum und Mittel zum Vermischen umfasst,
- einen Vorratsbehälter für eine Lösung, die ein oder mehrere Polyol(e) umfasst 2, und
- einen Vorratsbehälter für eine wässrige Lösung, die Wasserstoffperoxid umfasst 3.

11. Verfahren zum Dekontaminieren von Böden und/oder Schlämmen nach Anspruch 9 oder 10, **dadurch gekennzeichnet, dass** die transportfähige Anlage nachgeschaltet Folgendes umfasst:
- einen Abscheide-/Absetzbehälter 4, der ein nach oben offenes Becken, Mittel zum Vermischen sowie einen oberflächlichen Abstreifer für Kohlenwasserstoffe umfasst.

12. Verfahren zum Dekontaminieren von Böden und/oder Schlämmen nach einem der Ansprüche 9 bis 11, **dadurch gekennzeichnet, dass** die transportfähige Anlage darüber hinaus eine Dreiphasen-Absetzvorrichtung 5 umfasst, die dem Abscheide-/Absetzbehälter 4 nachgeschaltet ist.

13. Verfahren zum Dekontaminieren von Böden und/oder Schlämmen nach einem der Ansprüche 9 bis 12, **dadurch gekennzeichnet, dass** die transportfähige Anlage darüber hinaus einen vorgeschalteten Zerkleinerer 9 umfasst.

14. Verfahren zum Dekontaminieren von Böden und/oder Schlämmen nach einem der Ansprüche 9 bis 13, **dadurch gekennzeichnet, dass** die transportfähige Anlage ein Fördermittel umfasst, das eine archimedische Schraube oder einen zuführenden oder abführenden Endlos-Schneckenförderer umfasst, um den verunreinigten Boden und/oder Schlamm in die Mischvorrichtung 1 zu fördern, und/oder ein Fördermittel, das eine archimedische Schraube oder einen zuführenden oder abführenden Endlos-Schneckenförderer umfasst, um den dekontaminierten Boden und/oder Schlamm, welcher sich am Grund des Abscheide-/Absetzbeckens 4 niedergeschlagen hat, einem Vorratsbehälter für den dekontaminierten Boden und/oder Schlamm 10 zuzuführen.

15. Verwendung zunächst einer wässrigen Lösung, die eine Mischung aus Glykol und aus Glycerin umfasst, und danach einer wässrigen Lösung, die Wasserstoffperoxid umfasst, um einen Boden und/oder Schlamm zu dekontaminieren, der mit Kohlenwasserstoffen verunreinigt ist.

## Claims

1. A method for decontaminating soil and/or sludge polluted by hydrocarbons, **characterised in that** it comprises the successive steps of:
- a) mixing said soil and/or said sludge polluted by hydrocarbons with an aqueous solution comprising a mixture of glycol and glycerol so as to obtain a mixture a'),
- b) adding to mixture a') an aqueous solution comprising hydrogen peroxide and mixing so as to obtain a mixture b'), and
- c) settling mixture b') in a separating-settling tank comprising water, such that the hydrocarbons are separated by flotation from said soil and/or sludge and that said soil/and or said sludge from which the hydrocarbons have been removed precipitates out on the bottom of the settling tank.

2. A method for decontaminating soil and/or sludge according to the preceding claim, **characterised in that** the concentration of hydrogen peroxide in the aqueous solution comprising hydrogen peroxide is between 30% and 40% by volume relative to the total volume of the aqueous solution of hydrogen peroxide.

3. A method for decontaminating soil and/or sludge according to either one of the preceding claims, **characterised in that**, in step a), said soil and/or sludge polluted by hydrocarbons is mixed with the aqueous solution comprising a mixture of glycol and glycerol in a ratio by volume of at least 20 to 60 litres by volume per m³ of soil and/or sludge polluted by hydrocarbons.

4. A method for decontaminating soil and/or sludge according to any one of the preceding claims, **characterised in that**, in step b), mixture a') is mixed with an aqueous solution of hydrogen peroxide in a ratio by volume of 20 to 30 litres of aqueous solution of hydrogen peroxide/m³ of mixture a').

5. A method for decontaminating soil and/or sludge according to any one of the preceding claims, **characterised in that**, in step c), mixture b') is mixed with water in a ratio by volume of at least 50% by volume of water relative to the volume of mixture b').

6. A method for decontaminating soil and/or sludge according to any one of the preceding claims, **characterised in that** the soil and/or sludge to be treated has a kinematic viscosity of between 0.0003 and 0.0008 m²/s (300 and 800 cSt).

7. A method for decontaminating soil and/or sludge according to any one of the preceding claims, **characterised in that** the method is carried out at ambient temperature.

8. A method for decontaminating soil and/or sludge according to any one of the preceding claims, **characterised in that** the hydrocarbons are selected from the group made up of heavy hydrocarbons, aliphatic hydrocarbons, polycyclic aromatic hydrocarbons and any combination thereof.

9. A method for decontaminating soil and/or sludge according to any one of the preceding claims, **characterised in that** it is carried out by a transportable installation.

10. A method for decontaminating soil and/or sludge according to claim 9, **characterised in that**, in the upstream to downstream direction, the transportable installation comprises:
- a mixer 1 comprising a closed enclosure and mixing means,
- a storage tank for a solution comprising one or more polyol(s) 2, and
- a storage tank for an aqueous solution comprising hydrogen peroxide 3.

11. A method for decontaminating soil and/or sludge according to claim 9 or 10, **characterised in that**, in the downstream direction, the transportable installation comprises:
- a separating-settling tank 4 comprising an open-topped vessel, means for mixing and a surface hydrocarbon skimmer.

12. A method for decontaminating soil and/or sludge according to any one of claims 9 to 11, **characterised in that** the transportable installation furthermore comprises a three-phase settler 5 installed after the separating-settling tank 4.

13. A method for decontaminating soil and/or sludge according to any one of claims 9-12, **characterised in that** the transportable installation furthermore comprises an upstream crusher 9.

14. A method for decontaminating soil and/or sludge according to any one of claims 9 to 13, **characterised in that** the transportable installation comprises a conveying means comprising an Archimedes' screw or an endless loading or unloading screw for conveying the polluted soil and/or sludge into mixer 1 and/or a conveying means comprising an Archimedes' screw or an endless loading or unloading screw for conveying the decontaminated soil and/or sludge which has precipitated out on the bottom of the separating-settling tank 4 to a storage tank 10 for the decontaminated soil and/or sludge.

15. Sequential use of an aqueous solution comprising a mixture of glycol and glycerol and of an aqueous solution comprising hydrogen peroxide for decontaminating soil and/or sludge polluted by hydrocarbons.
